# EUROPEAN PATENT SPECIFICATION

(11) **EP 3 436 676 B1**
(45) Date of publication and mention of the grant of the patent: **08.01.2020**
(21) Application number: 17715987.8
(22) Date of filing: 30.03.2017
(51) Int. Cl.: F02B 75/32, F02B 75/28, F02B 75/02

(54) **GUIDE CAM ASSEMBLY FOR DIFFERENTIAL AND VARIABLE STROKE CYCLE ENGINES**
LEITNOCKENANORDNUNG FÜR TAKTMOTOREN MIT DIFFERENZIAL- UND VARIABLEM HUB
ENSEMBLE CAME DE GUIDAGE POUR MOTEURS À CYCLES DE COURSE VARIABLES ET DIFFÉRENTIELS

(30) Priority: 01.04.2016 GB 201605580
(43) Date of publication of application: 06.02.2019
(73) Proprietor: Yan Engines, Ltd., Brighton, East Sussex BN1 3XF (GB)
(72) Inventor: YAN, Hailuat D., Austin, Texas 78737 (GB); SIMMONS, Gregory Carlyon, Brighton, East Sussex BN1 5AQ (GB); GLOVER, James Peter, Southampton, Hampshire SO14 3AL (GB)
(74) Representative: D Young & Co LLP
(86) International application number: PCT/GB2017/050895
(87) International publication number: WO 2017/168158

(56) References cited:
- EP-A1- 2 995 800
- AU-A1- 2015 221 517
- US-A- 1 220 095
- US-A- 1 852 890
- US-A- 2 222 367
- US-A- 5 243 938
- US-A1- 2013 014 713
- US-A1- 2013 312 703
- US-A1- 2014 366 847

## Description

### FIELD

Embodiments disclosed herein relate to internal combustion engines, and in particular, piston internal combustion engines. More particularly, embodiments disclosed herein relate to a guide cam assembly for guiding components of two-part pistons in differential and variable-stroke cycle internal combustion engines.

### BACKGROUND AND SUMMARY

The internal combustion engine is an engine where the combustion of a fuel occurs with an oxidizer in a combustion chamber that is an integral part of the working fluid flow circuit. In an internal combustion engine the expansion of the high-temperature and high-pressure gases produced by combustion apply direct force to some component of the engine, typically a piston. This force moves the component over a distance, transforming chemical energy into useful mechanical energy.

In one aspect, embodiments disclosed herein relate to an engine having an engine shaft and a piston configured to reciprocate within a cylinder chamber having an axis, each piston having an first piston part and piston stem to move in unison with or separately from a second piston part to define piston strokes for different thermal functions of the engine. The engine further includes a linkage assembly having a first end coupled to the engine and a second end coupled to the piston stem defining a copy point, an actuator that engages the linkage assembly, and a guide cam that engages a guide cam follower on the linkage assembly. The actuator and the guide cam are operable to control motion of the linkage assembly to thereby define substantially linear movement of the copy point along the cylinder chamber axis.

### BRIEF DESCRIPTION OF THE DRAWINGS

The invention is illustrated in the accompanying drawings wherein,
Figure 1 illustrates a schematic view of one embodiment of a guide cam assembly.
Figure 2 illustrates a top view of an embodiment of coaxial actuator and guide cams of a guide cam assembly.
Figure 3 illustrates a schematic view of an alternate embodiment of a guide cam assembly incorporating a pantographic linkage assembly.
Figure 4 illustrates a schematic view an alternate embodiment of a guide cam assembly incorporating a movable fulcrum.
Figure 5 illustrates a schematic view of an alternate embodiment of a guide cam assembly.

### DETAILED DESCRIPTION

Embodiments disclosed herein relate to a guide cam assembly for guiding components of two-part pistons in differential and variable-stroke internal combustion engines. The engine typically includes an engine block having one or more cylinder bores and two-part pistons therein. Each two-part piston includes an upper or first piston part and a lower or second piston part which are separable from each other. The upper piston part is in sliding contact (or abutting) engagement with a respective cylinder bore wall and configured to at certain times engage the lower piston part. A piston stem is coupled at a first end to the upper piston part, and is hingedly (or pivotally) coupled at a second end to a linkage assembly. The hinged coupling (pivotal junction) may define a 'copy' point.

The guide cam assembly may include an actuator that engages the linkage assembly and thereby effects or controls vertical movement of the piston stem. In one embodiment, the actuator may be an actuator cam configured to engage an actuator cam follower on the linkage assembly and thereby effect or control vertical movement of the piston stem. In turn, the piston stem effects or controls vertical movement of the upper piston part, which is also constrained by the cylinder bore wall. Alternatively, an electronic actuator may be used to effect or control vertical movement of the first piston part. Other actuation mechanisms may also be used including, but not limited to, an electromechanical actuator operable independently of the engine shaft, or a hydraulic actuator. Yet other actuation mechanisms may include means controlled electronically during engine operation such as electro-mechanical, electromagnetic, hydraulic, pneumatic or devices controlled via electronic circuit or solenoid.

The guide cam assembly further generally includes a guide cam configured to engage a guide cam follower at a different location on the linkage assembly and thereby control lateral movement of the piston stem. In turn, the piston stem controls lateral movement of the upper piston part, which is also constrained by the cylinder bore wall. One or more return mechanisms may be disposed at locations on the linkage assembly to bias the linkage assembly in a direction substantially opposite the mating engagement between respective cams and cam followers. A return mechanism may include a spring, a cam, an electro-mechanical actuator, a hydraulic actuator, a pneumatic actuator, or an electromagnetic actuator. In certain embodiments, multiple actuator and guide cams are coaxial, but are not required to be, and in other embodiments the multiple cams are not coaxial. Cam lobes or lobe profiles of any of the cams may be optimized to provide various different movements of the linkage assembly to in turn control movement of the copy point and piston stem, and thereby the first piston part.

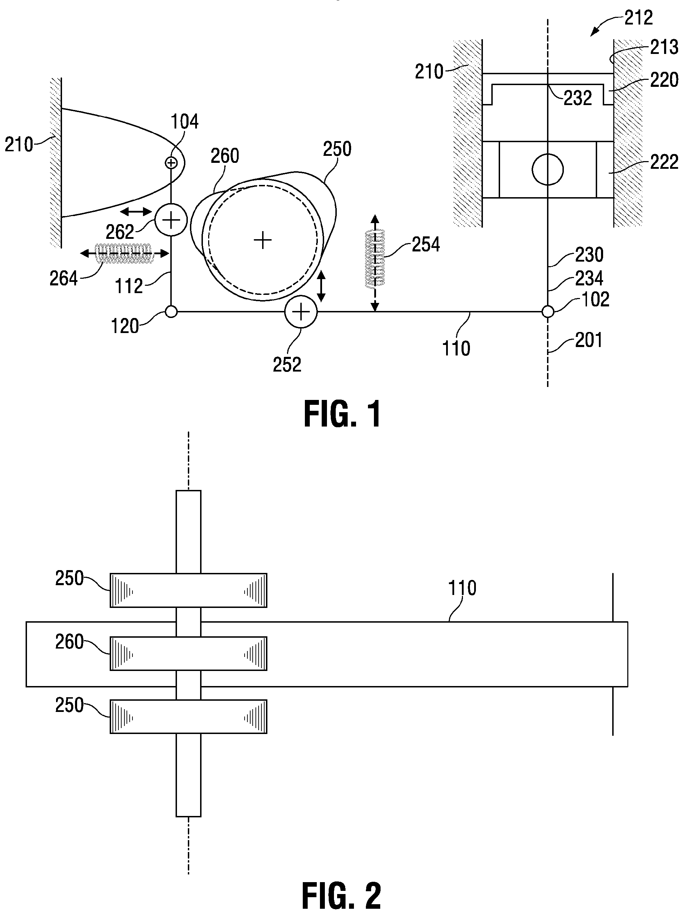

Figure 1 illustrates a schematic view of one embodiment of a guide cam assembly. The variable-stroke cycle internal combustion engine typically includes an engine block 210 having one or more cylinder bores 212, and an upper or first piston part 220 located within each of the one or more cylinder bores 212. The upper piston part 220 may be in sliding contact (or abutting) engagement with a respective cylinder bore wall 213. The upper piston part 220 is configured to at certain times engage a lower or second piston part 222. A piston stem 230 is coupled at a first end 232 to the upper piston part 220, and is hingedly (or pivotally) coupled at a second end 234 to a piston lever-link bar 110. The hinged coupling (pivotal junction) may define a 'copy' point 102.

The guide cam assembly includes a linkage assembly comprising a lever-link-bar 110 and fulcrum-link bar 112 coupled together at common ends 120. At an opposite end from this coupling 120, the lever-link bar 110 is coupled to the piston stem 230 at the copy point 102, and the fulcrum-link bar 112 is hingedly coupled to the engine block 210 at a first hinge junction 104. The hinged coupling (pivotal junction) defines an 'anchor' (or attachment) point 104. The guide cam assembly further includes 1) an actuator cam 250 configured to engage an actuator cam follower 252 on the lever-link bar 110 and thereby control vertical movement of the piston stem 230, which in turn controls vertical movement of the first piston part 220; and 2) a guide cam 260 configured to engage a guide cam follower 262 on the fulcrum-link bar 112 and thereby control lateral movement of the piston stem 230, which in turn controls lateral movement of the first piston part 220. One or more return mechanisms 254, 264 may be disposed at locations on the lever-link bar 110 and fulcrum-link bar 112, respectively, to bias each link in a direction substantially opposite the mating engagement between respective cams and cam followers. Figure 2 illustrates a top view of coaxial actuator and guide cams of the guide cam assembly arranged on a common shaft.

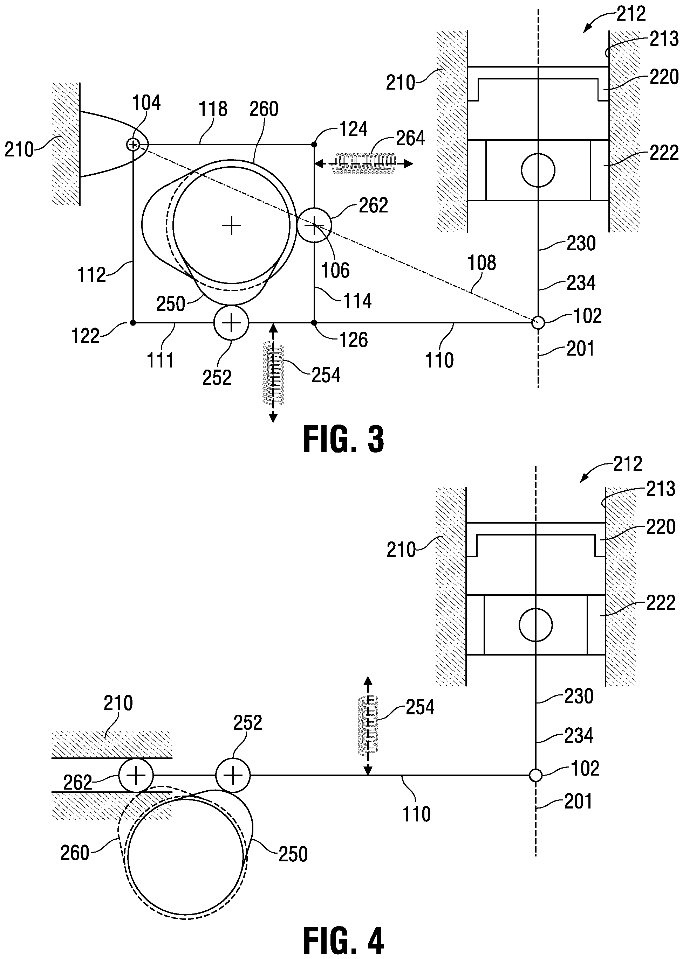

Figure 3 illustrates a schematic view of another embodiment of a guide cam assembly. The guide cam assembly incorporates a linkage assembly (e.g., a four-bar-linkage) including a portion 111 of the piston lever-link-bar 110, a fulcrum-link bar 112, a force-link bar 114, and a rocker-link bar 118. In defining and locating the four-bar-linkage, the linkage assembly may be hingedly coupled to the engine block 210 at a first hinge junction 104 of a first end of the fulcrum-link bar 112 and a first end of the rocker-link bar 118. The hinged coupling (pivotal junction) defines an 'anchor' (or attachment) point 104. The four-bar-linkage further includes a second hinge junction 122 of a second end of the fulcrum-link bar 112 and a first end of the portion 111 of the piston lever-link-bar 110, a third hinge junction 124 of a second end of the rocker-link bar 118 and a first end of the force-link bar 114, and a fourth hinge junction 126 of a second end of the force-link bar 114 and a second end of the portion 111 of the piston lever-link-bar 110.

The guide cam assembly further includes 1) an actuator cam 250 configured to engage an actuator cam follower 252 on the lever-link bar 110 and thereby control vertical movement of the piston stem 230, which in turn controls vertical movement of the first piston part 220; and 2) a guide cam 260 configured to engage a guide cam follower 262 on the force-link bar 114 and thereby control lateral movement of the piston stem 230, which in turn controls lateral movement of the first piston part 220. The guide cam follower 262 is coupled (for example rotatably or pivotally) to the force-link bar 114 at an "origin" point (or axis) 106. The "origin" point 106 is located at the intersection between the force-link bar 114 and an imaginary line - indicated by line 108 - defined between the 'copy' point 102 and the 'anchor' point 104. One or more return mechanisms 254, 264 may be disposed at locations on the lever-link bar 110 and force-link bar 114, respectively, to bias each link in a direction substantially opposite the mating engagement between respective cams and cam followers.

The four-bar-linkage of the guide apparatus 100 may be configured to form a pantographic assembly or apparatus. It will be understood by those skilled in the art that a pantographic assembly may be formed from mechanical linkages connected in a manner based on parallelograms, such that movement of one point of the assembly (for example, the "origin" point 106) produces respective (and possibly scaled) movements in a second point of the assembly (for example, the 'copy' point 102).

Figure 4 illustrates a schematic view of yet another embodiment of a guide cam assembly. The guide cam assembly incorporates a movable fulcrum at one end of the lever-link bar. A lever-link bar 110 is coupled at a first end to a cam follower 262 configured as the movable fulcrum, and at a second end to the first piston part 220 by way of the piston stem 230 at a copy point 102. The movable cam follower 262 may be configured to move in any direction. Preferably, the movable cam follower 262 may move in a direction substantially perpendicular to the cylinder axis 201. The guide cam assembly further includes 1) an actuator cam 250 configured to engage an actuator cam follower 252 on the lever-link bar 110 and thereby control vertical movement of the piston stem 230, which in turn controls vertical movement of the first piston part 220; and 2) a guide cam 260 configured to engage the movable cam follower 262 and thereby control lateral movement of the piston stem 230, which in turn controls lateral movement of the first piston part 220. A return mechanism 254 may be disposed at a location on the lever-link bar 110 to bias the lever-link bar 110 in a direction substantially opposite the mating engagement between the actuator cam 250 and cam follower 252.

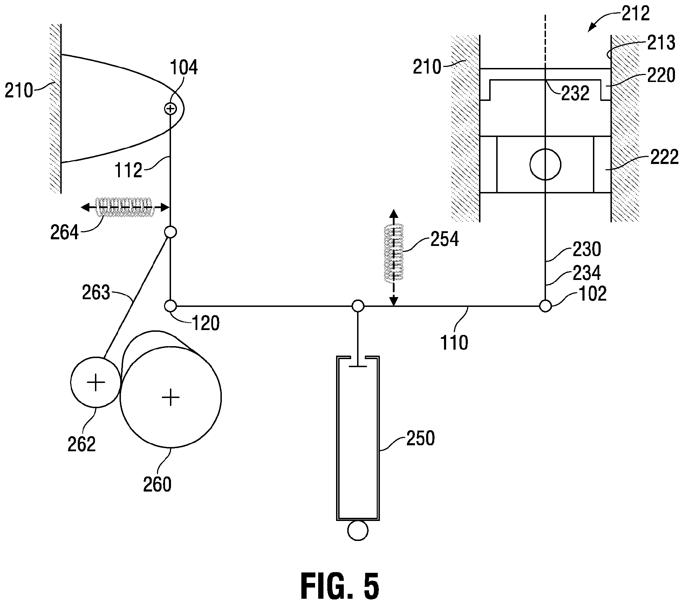

Figure 5 illustrates a schematic view of yet another embodiment of a guide cam assembly. The guide cam assembly includes a linkage assembly comprising a lever-link-bar 110 and fulcrum-link bar 112 coupled together at common ends 120. At an opposite end from this coupling 120, the lever-link bar 110 is coupled to the piston stem 230 at the copy point 102, and the fulcrum-link bar 112 is hingedly coupled to the engine block 210 at a first hinge junction 104. The hinged coupling (pivotal junction) defines an 'anchor' (or attachment) point 104. The guide cam assembly further includes an actuator 250 configured to engage the lever-link bar 110 and thereby control vertical movement of the piston stem 230, which in turn controls vertical movement of the first piston part 220. The actuator 250 may be any type of actuator, including but not limited to, an electronic actuator, an electromechanical actuator operable independently of the engine shaft, a hydraulic actuator, a pneumatic actuator, an electro-mechanical actuator, an electromagnetic actuator, an actuator controlled via electronic circuit or solenoid, or any other type capable of effecting movement of the linkage assembly. The guide cam assembly further includes a guide cam 260 configured to engage a guide cam follower 262 on the fulcrum-link bar 112 and thereby control lateral movement of the piston stem 230, which in turn controls lateral movement of the first piston part 220. The guide cam follower 262 may be rigidly coupled to the fulcrum-link bar 112 by a linkage 263. A return mechanism 254 may be disposed at a location on the lever-link bar 110 to bias the lever-link bar in a direction substantially opposite movement of the actuator 250. A return mechanism 264 may be disposed at a location on the fulcrum-link bar 112 to bias the fulcrum-link bar 112 in a direction substantially opposite the mating engagement between the guide cam 260 and the guide cam follower 262.

A method of operating a differential-stroke or variable-stroke reciprocating internal combustion engine, the engine having an engine shaft and a piston configured to reciprocate within a cylinder chamber having an axis, each piston having a first piston part and piston stem operable to move in unison with or separately from a second piston part to define piston strokes for different thermal functions of the engine, includes providing a linkage assembly having a first end coupled to the engine and a second end coupled to the piston stem defining a copy point, an actuator that engages the linkage assembly, and a guide cam configured to engage a guide cam follower on the linkage assembly, wherein the actuator and guide cam are operable to control motion of the linkage assembly to thereby define substantially linear movement of the copy point along the cylinder chamber axis.

Reference throughout this specification to "one embodiment" or "an embodiment" or "certain embodiments" means that a particular feature, structure or characteristic described in connection with the embodiment is included in at least one embodiment of the present disclosure. Therefore, appearances of the phrases "in one embodiment" or "in an embodiment" or "in certain embodiments" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

In the claims below and the description herein, any one of the terms comprising, comprised of or which comprises is an open term that means including at least the elements/features that follow, but not excluding others. Therefore, the term comprising, when used in the claims, should not be interpreted as being limitative to the means or elements or steps listed thereafter. Any one of the terms including or which includes or that includes as used herein is also an open term that also means including at least the elements/features that follow the term, but not excluding others. Accordingly, including is synonymous with and means comprising.

It should be understood that the term "coupled," when used in the claims, should not be interpreted as being limitative to direct connections only. "Coupled" may mean that two or more elements are either in direct physical, or that two or more elements are not in direct contact with each other but yet still cooperate or interact with each other. "Coupled" may mean a rigid coupling, hinged coupling, pivotal coupling, and others.

Although one or more embodiments of the present disclosure have been described in detail, it will be apparent to those skilled in the art that many embodiments taking a variety of specific forms and reflecting changes, substitutions and alterations may be made without departing from the scope of the invention as set out in the claims. The described embodiments illustrate the scope of the claims but do not restrict the scope of the claims.

## Claims

1. An engine (210) having an engine shaft and a piston (220, 222) configured to reciprocate within a cylinder chamber (212) having an axis (201), each piston having an first piston part (220) and piston stem (230) to move in unison with or separately from a second piston part (222) to define piston strokes for different thermal functions of the engine, the engine comprising:
a linkage assembly (110, 112) having a first end (104) coupled to the engine and a second end (102) coupled to the piston stem defining a copy point;
an actuator (250) that engages the linkage assembly;
a guide cam (260) that engages a guide cam follower (262) coupled to the linkage assembly; and
a return mechanism (254) configured to bias movement of the linkage assembly against one of the actuator or the guide cam (260),
wherein the actuator and the guide cam are operable to control motion of the linkage assembly to thereby define substantially linear movement of the copy point along the cylinder chamber axis.

2. The engine of claim 1, wherein the actuator (250) comprises an actuator cam (250) that engages an actuator cam follower (252) coupled to the linkage assembly (110, 112).

3. The engine of claim 2, wherein the actuator cam (250) and the guide cam (260) are coaxial.

4. The engine of claim 2 or claim 3, further comprising a return mechanism (254) configured to bias the linkage assembly in a direction substantially opposite the mating engagement between the actuator cam (250) and the actuator cam follower (252).

5. The engine of any of claims 2 to 4, wherein the actuator cam (250) is configured to effect vertical movement of the piston stem (230), which thereby effects vertical movement of the first piston part (220).

6. The engine of any preceding claim, wherein the guide cam follower (252) is configured as a fulcrum point movable in a direction substantially perpendicular to the cylinder chamber axis.

7. The engine of claim 6, wherein the linkage assembly further comprises a four-bar linkage comprising a piston lever-link-bar (110), a fulcrum-link bar (112), a force-link bar (114), and a rocker-link-bar (118), wherein said four-bar-linkage is defined and located by:
a first hinge junction (104) pivotally coupled to said engine and connecting a first end of said fulcrum-link bar and a first end of said rocker-link bar;
a second hinge junction (122) connecting a second end of said fulcrum-link bar and a first end of said piston lever-link-bar;
a third hinge junction (124) connecting a second end of said rocker-link bar and a first end of said force-link bar; and
a fourth hinge junction (126) connecting a second end of said force-link bar and a location on said piston lever-link-bar.

8. The engine of claim 7, wherein the four-bar linkage defines a pantographic assembly.

9. The engine of any preceding claim, wherein the guide cam (260) is configured to control lateral movement of the piston stem (230), which thereby controls lateral movement of the first piston part (220).

10. The engine of any of claims 1 to 3 and 5 to 9, wherein the return mechanism (254) comprises one of a spring, a cam, an electro-mechanical actuator, a hydraulic actuator, a pneumatic actuator, or an electromagnetic actuator.

11. The engine of claim 1, wherein the actuator comprises one of an electro-mechanical actuator, a hydraulic actuator, a pneumatic actuator, or an electromagnetic actuator.

## Patentansprüche

1. Motor (210), der eine Motorwelle und einen Kolben (220, 222), der dazu ausgelegt ist, sich in einer Zylinderkammer (212), die eine Achse (201) aufweist, auf und ab zu bewegen, aufweist, wobei jeder Kolben einen ersten Kolbenteil (220) und eine Kolbenstange (230) aufweist, um sich gemeinsam mit oder unabhängig von einem zweiten Kolbenteil (222) zu bewegen, um Kolbenhübe für verschiedene thermische Funktionen des Motors zu definieren, wobei der Motor Folgendes umfasst:
ein Gestänge (110, 112), das ein erstes Ende (104), das mit dem Motor gekoppelt ist, und ein zweites Ende (102), das mit der Kolbenstange gekoppelt ist, aufweist und einen Kopierpunkt definiert;
ein Stellglied (250), das in das Gestänge eingreift;
eine Führungsnocke (260), die in einen mit dem Gestänge gekoppelten Führungsnockenstößel (262) eingreift; und
einen Umkehrmechanismus (254), der dazu ausgelegt ist, Bewegungen des Gestänges gegen das Stellglied oder die Führungsnocke (260) vorzuspannen,
wobei das Stellglied und die Führungsnocke die Bewegung des Gestänges steuern können, um dadurch eine im Wesentlichen lineare Bewegung des Kopierpunkts entlang der Zylinderkammerachse zu definieren.

2. Motor nach Anspruch 1, wobei das Stellglied (250) eine Stellgliednocke (250) umfasst, die in einen mit dem Gestänge (110, 112) gekoppelten Stellgliednockenstößel (252) eingreift.

3. Motor nach Anspruch 2, wobei die Stellgliednocke (250) und die Führungsnocke (260) koaxial sind.

4. Motor nach Anspruch 2 oder Anspruch 3, ferner einen Umkehrmechanismus (254) umfassend, der dazu ausgelegt ist, das Gestänge in eine Richtung vorzuspannen, die im Wesentlichen dem Passeingriff zwischen der Stellgliednocke (250) und dem Stellgliednockenstößel (252) entgegengesetzt ist.

5. Motor nach einem der Ansprüche 2 bis 4, wobei die Stellgliednocke (250) dazu ausgelegt ist, eine vertikale Bewegung der Kolbenstange (230) zu bewirken, wodurch die vertikale Bewegung des ersten Kolbenteils (220) bewirkt wird.

6. Motor nach einem der vorstehenden Ansprüche, wobei der Führungsnockenstößel (252) als Drehpunkt ausgelegt ist, der in eine Richtung im Wesentlichen senkrecht zur Zylinderkammerachse beweglich ist.

7. Motor nach Anspruch 6, wobei das Gestänge ferner ein Gestänge aus vier Stangen umfasst, das eine Kolbenhebelverbindungsstange (110), eine Drehpunktverbindungsstange (112), eine Kraftverbindungsstange (114) und eine Kipphebelverbindungsstange (118) umfasst, wobei das Gestänge aus vier Stangen durch Folgendes definiert und angeordnet ist:
eine erste Gelenkverbindung (104), die verschwenkbar mit dem Motor gekoppelt ist und ein erstes Ende der Drehpunktverbindungsstange mit einem ersten Ende der Kipphebelverbindungsstange verbindet;
eine zweite Gelenkverbindung (122), die ein zweites Ende der Drehpunktverbindungsstange mit einem ersten Ende der Kolbenhebelverbindungsstange verbindet;
eine dritte Gelenkverbindung (124), die ein zweites Ende der Kipphebelverbindungsstange mit einem ersten Ende der Kraftverbindungsstange verbindet; und
eine vierte Gelenkverbindung (126), die ein zweites Ende der Kraftverbindungsstange mit einer Stelle auf der Kolbenhebelverbindungsstange verbindet.

8. Motor nach Anspruch 7, wobei das Gestänge aus vier Stangen eine pantografische Anordnung definiert.

9. Motor nach einem der vorstehenden Ansprüche, wobei die Führungsnocke (260) dazu ausgelegt ist, die laterale Bewegung der Kolbenstange (230) zu steuern, wodurch die laterale Bewegung des ersten Kolbenteils (220) gesteuert wird.

10. Motor nach einem der Ansprüche 1 bis 3 und 5 bis 9, wobei der Umkehrmechanismus (254) eine Feder, eine Nocke, ein elektromechanisches Stellglied, ein hydraulisches Stellglied, ein pneumatisches Stellglied und/oder ein elektromagnetisches Stellglied umfasst.

11. Motor nach Anspruch 1, wobei das Stellglied ein elektromechanisches Stellglied, ein hydraulisches Stellglied, ein pneumatisches Stellglied und/oder ein elektromagnetisches Stellglied umfasst.

## Revendications

1. Moteur (210) ayant un arbre de moteur et un piston (220, 222) conçu pour effectuer un mouvement de va-et-vient à l'intérieur d'une chambre de cylindre (212) ayant un axe (201), chaque piston ayant une première partie de piston (220) et une tige de piston (230) pour se déplacer à l'unisson avec une seconde partie de piston (222) ou séparément de celle-ci pour définir des courses de piston pour différentes fonctions thermiques du moteur, le moteur comprenant :
un ensemble de liaison (110, 112) ayant une première extrémité (104) accouplée au moteur et une seconde extrémité (102) accouplée à la tige de piston définissant un point de copie ;
un actionneur (250) qui vient en prise avec l'ensemble de liaison ;
une came de guidage (260) qui vient en prise avec un poussoir de came de guidage (262) accouplé à l'ensemble de liaison ; et
un mécanisme de retour (254) conçu pour solliciter le mouvement de l'ensemble de liaison contre l'actionneur ou la came de guidage (260),
l'actionneur et la came de guidage permettant de commander le mouvement de l'ensemble de liaison pour ainsi définir un mouvement sensiblement linéaire du point de copie le long de l'axe de la chambre de cylindre.

2. Moteur selon la revendication 1, l'actionneur (250) comprenant une came d'actionneur (250) qui vient en prise avec un poussoir de came d'actionneur (252) accouplé à l'ensemble de liaison (110, 112).

3. Moteur selon la revendication 2, la came d'actionneur (250) et la came de guidage (260) étant coaxiales.

4. Moteur selon la revendication 2 ou 3, comprenant en outre un mécanisme de retour (254) conçu pour solliciter l'ensemble de liaison dans une direction sensiblement opposée à la prise d'accouplement entre la came d'actionneur (250) et le poussoir de came d'actionneur (252).

5. Moteur selon l'une quelconque des revendications 2 à 4, la came d'actionneur (250) étant conçue pour effectuer un mouvement vertical de la tige de piston (230), ce qui entraîne un mouvement vertical de la première partie de piston (220).

6. Moteur selon l'une quelconque des revendications précédentes, le poussoir de came de guidage (252) étant conçu comme un point pivot mobile dans une direction sensiblement perpendiculaire à l'axe de la chambre de cylindre.

7. Moteur selon la revendication 6, l'ensemble de liaison comprenant en outre une liaison à quatre barres comprenant une barre de liaison au levier de piston (110), une barre de liaison au pivot (112), une barre de liaison de force (114) et une barre de liaison au culbuteur (118), ladite liaison à quatre barres étant définie par et située près de :
une première jonction de charnière (104) accouplée de manière pivotante audit moteur et reliant une première extrémité de ladite barre de liaison au pivot et une première extrémité de ladite barre de liaison au culbuteur ;
une deuxième jonction de charnière (122) reliant une seconde extrémité de ladite barre de liaison au pivot et une première extrémité de ladite barre de liaison au levier de piston ;
une troisième jonction de charnière (124) reliant une seconde extrémité de ladite barre de liaison au culbuteur et une première extrémité de ladite barre de liaison de force ; et
une quatrième jonction de charnière (126) reliant une seconde extrémité de ladite barre de liaison de force et un emplacement sur ladite barre de liaison au levier de piston.

8. Moteur selon la revendication 7, la liaison à quatre barres définissant un ensemble du type pantographe.

9. Moteur selon l'une quelconque des revendications précédentes, la came de guidage (260) étant conçue pour commander le mouvement latéral de la tige de piston (230), qui commande ainsi le mouvement latéral de la première partie de piston (220).

10. Moteur selon l'une quelconque des revendications 1 à 3 et 5 à 9, le mécanisme de retour (254) comprenant un ressort, une came, un actionneur électromécanique, un actionneur hydraulique, un actionneur pneumatique ou un actionneur électromagnétique.

11. Moteur selon la revendication 1, l'actionneur comprenant un actionneur électromécanique, un actionneur hydraulique, un actionneur pneumatique ou un actionneur électromagnétique.
